# EUROPÄISCHE PATENTSCHRIFT

(11) **EP 1 611 731 B1**
(45) Veröffentlichungstag und Bekanntmachung des Hinweises auf die Patenterteilung: **30.01.2008**
(21) Anmeldenummer: 04721533.0
(22) Anmeldetag: 18.03.2004
(51) Int. Cl.: H04L 29/12

(54) **VERFAHREN UND VORRICHTUNG ZUM ERFASSEN DER REGISTRIERUNG DES ANSCHLUSSES EINES HAUSGERÄTES AN EINER BUSLEITUNGSANORDNUNG**
METHOD AND DEVICE FOR RECORDING THE REGISTRATION OF THE CONNECTION OF A HOUSEHOLD APPLIANCE TO A BUS LINE ARRANGEMENT
PROCEDE ET DISPOSITIF POUR DETECTER L'ENREGISTREMENT DU RACCORDEMENT D'UN APPAREIL MENAGER A UN ENSEMBLE BUS

(30) Priorität: 25.03.2003 DE 10313360
(43) Veröffentlichungstag der Anmeldung: 04.01.2006
(73) Patentinhaber: BSH Bosch und Siemens Hausgeräte GmbH, 81739 München (DE)
(72) Erfinder: BUCHNER, Theo, 93333 Neustadt (DE); GAUGLER, Johannes, 93055 Regensburg (DE)
(86) Internationale Anmeldenummer: PCT/EP2004/002860
(87) Internationale Veröffentlichungsnummer: WO 2004/086728

(56) Entgegenhaltungen:
- WO-A-99/43068
- WO-A-02/097555
- DE-A- 10 056 492
- FR-A- 2 670 590
- US-A- 5 352 957

## Beschreibung

Die Erfindung bezieht sich auf ein Verfahren und eine Vorrichtung zum Erfassen der Registrierung des Anschlusses eines Hausgerätes an einer Busleitungsanordnung, an der eine Mehrzahl von Hausgeräten für die Übertragung von Daten anzuschließen bzw. angeschlossen ist, wobei das betreffende eine Hausgerät mittels einer Geräteschnittstelle mit der genannten Busleitungsanordnung verbindbar ist, über die Daten in das und/oder von dem betreffende(n) Hausgerät übertragbar sind, und wobei das genannte eine Hausgerät über wenigstens eine Anzeigeeinrichtung verfügt, mittels der Betriebszustände und/oder Betriebsdaten des betreffenden Hausgerätes anzeigbar sind.

Es ist bereit bekannt (DE 100 56 492 A1), eine Mehrzahl von Hausgeräten an einer Busleitungsanordnung anzuschließen, über die Daten zu und von den betreffenden Hausgeräten übertragbar sind. Die Busleitungsanordnung kann dabei ein die Spannungs- bzw. Stromversorgungsleitungen der betreffenden Hausgeräte nutzendes Kommunikationsnetz sein. Im Übrigen können zumindest einige der betreffenden Hausgeräte mit einer Anzeigeeinrichtung ausgestattet sein, mittels der Betriebszustände und/oder Betriebsdaten in den betreffenden Hausgeräten anzeigbar sind. In diesem Zusammenhang ist es zwar auch bekannt, dass sich das jeweilige Hausgerät mit seiner Gerätenummer bei einem Dienstanbieter anmeldet, der sodann anhand der ihm zur Verfügung gestellten Gerätenummer verschiedene Informationen, wie aktualisierte Programme, Werbungen, etc. gegebenenfalls zur Anzeige auf der hausgeräteeigenen Anzeigeeinrichtung überträgt. Über Vorgänge, die beim Anschluss eines derartigen Hausgerätes an dem genannten Kommunikationsnetz ablaufen, ist in dem betreffenden Zusammenhang jedoch nichts näher angegeben.

Die Maßnahme, ein Hausgerät mit einer eigenen Geräteschnittstelle zu versehen, die mit einer Busleitungsanordnung verbindbar ist, über die Daten in das und/oder von dem betreffende(n) Hausgerät übertragbar sind, ist bereits an anderer Stelle vorgeschlagen worden (DE 102 08 221 A1). Dabei erfolgt der Anschluss der betreffenden Geräteschnittstelle an der genannten Busleitungsanordnung über ein Modem, das mit einer Spannungsversorgungsleitung verbunden ist, die zum einen die Versorgungsspannung für das betreffende Hausgerät liefert und die zum anderen als die erwähnte Busleitungsanordnung ausgenutzt ist. In dem betreffenden Zusammenhang ist es zwar als bekannt angegeben, dass ein Haushaltsgerät mittels einer Identifizierungsangabe eindeutig zu kennzeichnen ist. Über Maßnahmen bzw. Vorgänge, die im Zusammenhang mit dem Anschluss eines derartigen Hausgerätes an einer Busleitungsanordnung ablaufen, ist allerdings auch in diesem Zusammenhang nichts angegeben.

In FR 2 670 590 A ist ein Verfahren zur Herstellung einer Kommunikationsverbindung zwischen einem Steuergerät und einem zu steuernden Gerät über ein Hausnetzwerk mit einer entsprechenden Adressenvergabe für das Gerät beschrieben. Dabei wird die Kommunikationsverbindung in dem Hausnetzwerk von dem Steuergerät aus hergestellt, wobei die Suche nach einer freien Adresse für das Gerät ebenfalls von dem Steuergerät durchgeführt wird.

In US 5 352 957 A ist in einem Hausnetzwerk eine zentrale Kontrolleinrichtung vorgesehen, die über eine Anzeige verfügt, auf der Systemparameter, wie Adressen, Nummern angeschlossener Geräte oder Gerätezustände angezeigt werden können. Bei Anschluss einer neuen Lampe an das Hausnetzwerk wird aufgrund dessen, dass die Lampe brennt darauf geschlossen, dass die Registrierung der Lampe in dem Hausnetzwerk erfolgreich abgeschlossen worden ist.

Wenn ein Hausgerät an eine Busleitungsanordnung angeschlossen wird, an der eine Mehrzahl von Hausgeräten für die Übertragung von Daten anzuschließen bzw. angeschlossen ist, dann genügt es zuweilen nicht, nur über die Gerätenummer des betreffenden Hausgerätes zu verfügen, um Zugang zu diesem zu erhalten. Vielmehr werden weitere Angaben über den Zugangs- bzw. Verbindungspfad zum betreffenden Hausgerät benötigt. Derartige Angaben, die Adressen darstellen, können beim Anschluss eines Hausgerätes an einer Busleitungsanordnung für das betreffende Hausgerät beispielsweise entsprechend den bekannten Hausgeräte-Protokollen EHS1.3a bzw. KNX-A-mode vergeben und in Adressspeichern erfasst werden. Diese Adressenspeicher können im Falle der Adressierung des jeweiligen Haugerätes abgefragt werden und legen somit den in Frage kommenden Verbindungspfad zum jeweils adressierten Hausgerät eindeutig fest. Eine derartige Registrierung des Anschlusses des jeweiligen Hausgerätes an der erwähnten Busleitungsanordnung erfordert einige Zeit, während der das betreffende Hausgerät zumindest nicht imstande ist, über die betreffende Busleitungsanordnung mit anderen Hausgeräten oder mit externen Überwachungs- und/oder Steuereinrichtungen zu kommunizieren, die in irgendeiner Weise mit der betreffenden Busleitungsanordnung verbindbar sind.

Darüber hinaus liefert ein Hausgerät, das in eine derartige Registrierungsprozedur einbezogen ist, seinem Benutzer bisher keinerlei Informationen über die Erfassung seiner Registrierung. Die Bereitstellung einer derartigen Information für den Benutzer des jeweiligen Hausgeräts wird jedoch als erforderlich erachtet, um dem betreffenden Benutzer den Eindruck zu vermitteln, dass das betreffende Hausgerät nicht etwa defekt ist, sondern in eine Registrierungsprozedur einbezogen ist.

Der Erfindung liegt daher die Aufgabe zugrunde, einen Weg zu zeigen, wie bei einem Verfahren und einer Vorrichtung der eingangs genannten Art auf relativ einfache Weise bei der Registrierung des Anschlusses eines Hausgeräts an einer Busleitungsanordnung, an der eine Mehrzahl von Hausgeräten für die Übertragung von Daten anzuschließen bzw. angeschlossen ist, dem Benutzer oder Betreiber des betreffenden Hausgeräts eine Information über diese Registrierung, also über deren Erfassung bereitgestellt werden kann.

Gelöst wird die vorstehend aufgezeigte Aufgabe bei einem Verfahren der eingangs genannten Art erfindungsgemäß dadurch, dass die Anzeigeeinrichtung des genannten Hausgerätes zur Visualisierung des Ablaufs und/oder Zustands der Registrierung des Anschlusses des betreffenden Hausgerätes an der Busleitungsanordnung mit ausgenutzt wird.

Hierdurch ergibt sich der Vorteil, dass auf besonders einfache Weise in dem Hausgerät, das sich an eine Busleitungsanordnung anschließt, mit der eine Mehrzahl von Hausgeräten zu verbinden oder verbunden ist, der Zustand und/oder der Ablauf der auf diesen Anschluss hin erfolgenden Registrierung angezeigt werden kann, indem dafür die in dem betreffenden Hausgerät ohnehin vorhandene Anzeigeeinrichtung für eine Visualisierung herangezogen wird. Eine derartige Anzeigevorrichtung wird üblicherweise in dem betreffenden Hausgerät für die Anzeige des jeweiligen Programmablaufs verwendet; sie zeigt beispielsweise in dem Fall, dass das betreffende Hausgerät eine Waschmaschine ist und sich im Schleuderbetrieb befindet, die Angabe "Schleudern" und gegebenenfalls die jeweilige Schleuderdrehzahl an.

Da die Anzeigeeinrichtungen in Hausgeräten sehr unterschiedlich gestaltet sein können, können für die Visualisierung der erwähnten Registrierung auch entsprechend unterschiedliche Anzeigen geliefert werden. Als Anzeigeeinrichtungen kommen beispielsweise Siebensegmentanzeigeeinrichtungen oder grafische Flüssigkristallanzeigeeinrichtungen in Frage. Damit können beispielsweise grafische Zustandsbalken oder Textmeldungen in der jeweiligen Anzeigeeinrichtung angezeigt werden. Mittels einer Siebensegmentanzeigeeinrichtung kann im übrigen beispielsweise eine Countdown-Anzeige erfolgen, mit der z.B. von einer vorgegebenen Ausgangszahl ausgehend der Registrierungsfortschritt bis zur Anzeige des Wertes 0 visualisiert werden kann.

Zweckmäßigerweise wird die Registrierung auf eine Inbetriebnahme des an der Busleitungsanordnung angeschlossenen genannten einen Hausgeräts hin vorgenommen. Dadurch ergibt sich der Vorteil, dass die für die Nutzung des betreffenden Hausgeräts erforderliche Inbetriebsetzung für dessen Registrierung und damit für eine Visualisierung des jeweiligen Zustands und/oder Ablaufs der betreffenden Registrierung mit herangezogen werden kann.

Von Vorteil ist es ferner, für die Visualisierung des genannten Registrierungsablaufs und/oder -zustands von einem das betreffende Hausgerät mit der genannten Busleitungsanordnung verbindenden Buskoppler gelieferte Ablauf- und/oder Statusmeldungen heranzuziehen. Dadurch brauchen keine zusätzlichen Einrichtungen für die Bereitstellung von Ablauf- und/oder Statusmeldungen vorgesehen zu werden.

Zweckmäßigerweise wird im Zuge der Visualisierung des genannten Registrierungsablaufs und/oder -zustands durch die betreffende Anzeigeeinrichtung zunächst ein Hausadressen-Management mittels der genannten Anzeigeeinrichtung visualisiert, durch das das betreffende eine Hausgerät in ein die Busleitungsanordnung umfassendes virtuelles Netzwerk dadurch eingebunden wird, dass ihm in dem betreffenden virtuellen Netzwerk eine eindeutige Hausgeräteadresse zugeteilt wird, woraufhin durch die betreffende Anzeigeeinrichtung ein Kettungs- bzw. Linkadressen-Management visualisiert wird, durch das in dem genannten virtuellen Netzwerk dem mit dem betreffenden einen Hausgerät verbundenen Buskoppler eine eindeutige Buskoppleradresse zugeteilt wird, an Hand der der betreffende Buskoppler unter den mit den einzelnen vorhandenen Hausgeräten verbundenen Buskopplern eindeutig identifizierbar ist, und schließlich wird durch die betreffende Anzeigeeinrichtung die Durchführung einer Mitteilungsprozedur visualisiert, durch die die Geräteklasse des betreffenden einen Hausgeräts in dem genannten virtuellen Netzwerk bekanntgegeben wird, anhand der die in dem betreffenden virtuellen Netzwerk vorhandenen Hausgeräte angeben, ob sie mit dem genannten einen Hausgerät kommunizieren wollen oder müssen.

Durch diese Maßnahmen wird auf einfache, aber dennoch sichere Weise erreicht, dass das genannte eine Hausgerät in dem genannten virtuellen Netzwerk eindeutig identifizierbar ist und eine Kommunikation zwischen den an dem betreffenden virtuellen Netzwerk angeschlossenen Hausgeräten problemlos möglich ist. Überdies kann der Benutzer oder Betreiber des betreffenden Hausgerätes durch die genannte Visualisierung auf einfache Weise feststellen, ob der Registrierungs- bzw. Anmeldevorgang noch läuft, ob das genannte Hausgerät an der Busleitungsanordnung angemeldet ist, ob eine Störung in der Kommunikation über die Busleitungsanordnung vorliegt oder ob ein eine potentielle Gegenstelle darstellendes Hausgerät oder eine Verbindung zu einem Überwachungs-und/oder Steuergerät noch aktiv ist, etc..

Zweckmäßigerweise wird der das Hausadressen-Management umfassende Visualisierungsschritt lediglich bei Erstinbetriebnahme des genannten einen Hausgeräts durchgeführt und die das Linkadressen-Management sowie die Mitteilungsprozedur umfassenden Visualisierungsschritte werden bei jeder Inbetriebnahme des betreffenden Hausgeräts durchgeführt.

Das erwähnte Hausadressen-Management braucht dabei in vorteilhafter Weise nur bei der erstmaligen Verbindung des betreffenden Hausgeräts mit der genannten Busleitungsanordnung durchgeführt zu werden. Das Kettungs- bzw. Linkadressen-Management und die erwähnte Mitteilungsprozedur werden indessen mit jeder erneuten Inbetriebnahme des betreffenden Hausgeräts durchzuführen sein, um den zu diesem Zeitpunkt aktuellen Zustand in dem erwähnten virtuellen Netz zu berücksichtigen. An dieser Stelle sei jedoch angemerkt, dass unter einer erneuten Inbetriebnahme des genannten Hausgeräts nicht nur dessen Wiedereinschalten zu verstehen ist, wenn das betreffende Hausgerät physikalisch mit seinem zugehörigen Buskoppler noch verbunden ist. In diesem Falle könnte die Durchführung des erwähnten Kettungs- bzw. Linkadressen-Managements und der erwähnten Mitteilungsprozedur entfallen, wenn also lediglich die Versorgungsspannung für das betreffende Hausgerät zu dessen Wiederinbetriebnahme eingeschaltet wird. Eine erneute Durchführung des erwähnten Kettungs- bzw. Linkadressen-Managements und der genannten Mitteilungsprozedur wäre dann lediglich in dem Fall erforderlich, dass das betreffende Hausgerät von seinem zugehörigen Buskoppler getrennt und anschließend, beispielsweise nach einer Reparatur, wieder mit dem betreffenden Buskoppler verbunden wird und dass sodann die Versorgungsspannung für das betreffende Hausgerät zu dessen Wiederinbetriebnahme eingeschaltet wird.

Die genannte Busleitungsanordnung kann zweckmäßigerweise entweder als ein Kommunikationsleitungen umfassendes leitungsgebundenes Kommunikationsnetz betrieben werden, als dessen Kommunikationsleitungen insbesondere von einer Netzspannungsquelle gespeiste Spannungsversorgungsleitungen der einzelnen Hausgeräte verwendet werden, oder es kann als ein Funknetz betrieben werden, in welchem die einzelnen Hausgeräte mittels die genannten Buskoppler bildender Sende-/ Empfangseinrichtungen kommunizieren. In beiden Fällen ergibt sich der Vorteil eines relativ einfach aufzubauenden Kommunikationsnetzes.

Zur Durchführung des Verfahrens gemäß der Erfindung zum Registrieren des Anschlusses eines Hausgerätes an einer Busleitungsanordnung, an der eine Mehrzahl von Hausgeräten anzuschließen bzw. angeschlossen ist, dient vorzugsweise eine Vorrichtung, bei der das betreffende eine Hausgerät eine eigene Geräteschnittstelle aufweist, die mit der genannten Busleitungsanordnung verbindbar ist, über welche Daten in das und/oder von dem betreffende(n) Hausgerät übertragbar sind, und bei der das genannte eine Hausgerät über wenigstens eine Anzeigeeinrichtung verfügt, mittels der Betriebszustände und/oder Betriebsdaten des betreffenden Hausgerätes anzeigbar sind. Diese Vorrichtung ist gemäß der vorliegenden Erfindung dadurch gekennzeichnet, dass die Anzeigeeinrichtung des genannten einen Hausgeräts über dessen hausgeräteeigene Geräteschnittstelle und gegebenenfalls von einem mit der genannten Busleitungsanordnung verbundenen Buskoppler im Zuge der Registrierung des Anschlusses des betreffenden Hausgerätes an der Busleitungsanordnung unter Visualisierung des genannten Registrierungsablaufs und/oder -zustands ansteuerbar ist.

Hierdurch ergibt sich der Vorteil, dass ohne zusätzlichen Vorrichtungs- bzw. Geräteaufwand ausgekommen werden kann, um die genannte Visualisierung vorzunehmen. Es wird einfach die in dem betreffenden Hausgerät ohnehin vorhandene Anzeigeeinrichtung für die betreffende Visualisierung mit ausgenutzt.

Zweckmäßigerweise sind die Registrierung des Anschlusses des genannten einen Hausgerätes an der Busleitungsanordnung und damit die Visualisierung des betreffenden Registrierungsablaufs und/oder -zustands durch Einschalten der Versorgungsspannung für das genannte Hausgerät auslösbar. Dies bringt den Vorteil mit sich, dass für die betreffende Registrierung und Visualisierung keine gesonderten Einschalteinrichtungen vorzusehen sind. Hinsichtlich der betreffenden Registrierung und Visualisierung ist hier noch anzumerken, dass diese Vorgänge, wie oben bereits erläutert, nicht bei jeder Inbetriebnahme des betreffenden Hausgeräts und damit nicht bei jedem Einschalten der Versorgungsspannung für das betreffende Hausgerät auszuführen sind. Vielmehr kann das erwähnte Hausadressen-Management nur bei der erstmaligen Verbindung des betreffenden Hausgeräts mit der genannten Busleitungsanordnung vorgenommen werden und das Kettungs- bzw. Linkadressen-Management und die erwähnte Mitteilungsprozedur können bei jeder Verbindung des betreffenden Hausgeräts mit der genannten Busleitungsanordnung vorgenommen werden.

Vorzugsweise ist die genannte Busleitungsanordnung über zumindest eine Übergangseinrichtung und ein gegebenenfalls mit dieser verbundenes Kommunikationsnetz mit einem externen Steuerungs- und/oder Überwachungsgerät verbindbar. Hierdurch ergibt sich der Vorteil, dass das jeweilige Hausgerät, das an der genannten Busleitungsanordnung angeschlossen ist und dessen Registrierung erfolgt ist, auf relativ einfache Weise mit einem externen Steuerungs- und/oder Überwachungsgerät verbunden werden kann, von dem aus in dem betreffenden Hausgerät Steuerungs- und/oder Überwachungsaufgaben durchgeführt werden können.

Anhand von Zeichnungen wird die Erfindung nachstehend an einem Ausführungsbeispiel näher erläutert.
- Fig. 1: zeigt in einer schematischen Darstellung eine Busleitungsanordnung, an der eine Mehrzahl von Hausgeräten angeschlossen ist und die über Übergangseinrichtungen mit Kommunikationsnetzen verbunden ist.
- Fig. 2: veranschaulicht in einer schematischen Darstellung den Ablauf von Registrierungsvorgängen im Zusammenhang mit einem der in Fig. 1 dargestellten Hausgeräte.

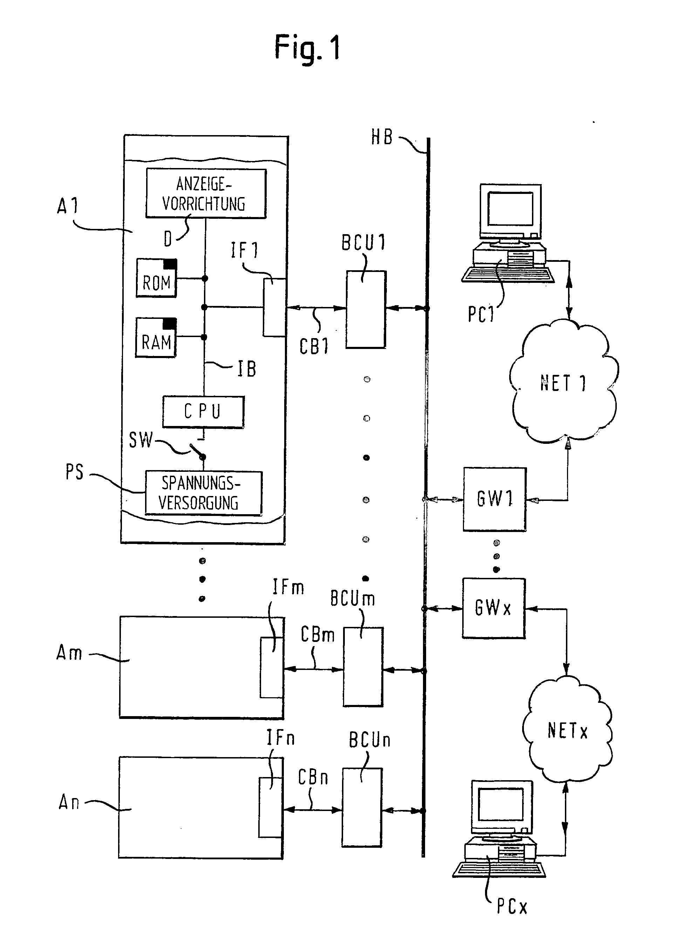

In Fig. 1 ist schematisch eine Mehrzahl von Hausgeräten A1...Am, An dargestellt, die über Kommunikationseinheiten darstellende Buskoppeleinheiten oder kurz Buskoppler BCU1...BCUm, BCUn an einer Busleitungsanordnung HB angeschlossen sind, die ein erstes Kommunikationsnetz bildet. Dieses Kommunikationsnetz ist über Übergangseinrichtungen GW1 bis GWx und mit diesem verbundenen weiteren Kommunikationsnetze NET1 bis NETx mit externen Steuerungs- und/oder Überwachungsgeräten PC1 bis PCx verbindbar.

Bei den in Fig. 1 angedeuteten Hausgeräten A1...Am, An handelt es sich beispielsweise um zu einem Haushalt oder zu mehreren Haushalten gehörende gleichartige oder unterschiedliche Hausgeräte, wie beispielsweise um eine Waschmaschine, einen Elektroherd, einen Geschirrspüler, ein Mikrowellengerät, einen Kühlschrank, eine Dunstabzugshaube, eine Klimaanlage, eine Kaffeemaschine, einen Staubsauger, eine Kochmulde oder einen Gefrierschrank. Die betreffenden Hausgeräte A1...Am, An sind hier nicht im einzelnen dargestellt; vielmehr sind lediglich die für ein Verständnis der vorliegenden Erfindung notwendigen Elemente gezeigt, und zwar genauer gesagt lediglich bezüglich des Hausgeräts A1.

Zu den vorstehend erwähnten Elementen des Hausgeräts A1 gehört unter anderem eine Zentraleinheit CPU, die an einem internen Bus IB angeschlossen ist, an dem ferner ein Festspeicher ROM und ein Schreib-Lesespeicher RAM sowie eine Anzeigeeinrichtung D angeschlossen sind. In dem Festspeicher ROM können für den Betrieb des Hausgerätes A1 dienende Arbeitsprogramme gespeichert sein, die mit Hilfe der Zentraleinheit CPU ausführbar sind. Der Schreib-Lese-Speicher RAM dient im Zuge der Ausführung derartiger Arbeitsprogramme als Arbeitsspeicher des dargestellten Rechnersystems.

Die Zentraleinheit CPU ist über einen in der Zeichnung angedeuteten Schalter SW an einer Spannungsversorgungseinrichtung PS angeschlossen, die hier eine eigene bzw. gesonderte Spannungsversorgungseinrichtung des Hausgeräts A1 ist. Diese Spannungsversorgungseinrichtung PS steht beispielsweise bei Ausfall der für den Betrieb des betreffenden Hausgeräts A1 dienenden Versorgungs- bzw. Netzspannung noch zur Verfügung, um von dem dargestellten Rechnersystem bestimmte Zustands- bzw. Meldesignale für eine mögliche Fernabfrage bereitstellen zu können.

Mit dem internen Bus IB des Hausgeräts A1 ist im vorliegenden Fall noch eine Schnittstelleneinrichtung IF1 verbunden, die für Kommunikationsverbindungen zu und von dem betreffenden Hausgerät A1 dient. Die betreffende Schnittstelleneinrichtung IF1 kann beispielsweise eine serielle Schnittstelleneinrichtung oder eine parallele Schnittstelleneinrichtung sein, wie sie für die Datenübertragung üblicherweise eingesetzt sind. Über diese Schnittstelleneinrichtung IF1 kann beispielsweise die zuvor erwähnte Fernabfrage erfolgen.

Bezüglich der in Fig. 1 dargestellten übrigen Hausgeräte Am und An ist anzumerken, dass diese schaltungsmäßig in gleicher Weise aufgebaut sein können wie das zuvor erläuterte Hausgerät A1. Die beiden angedeuteten Hausgeräte Am und An sind jeweils mit einer eigenen Schnittstelleneinrichtung IFm bzw. IFn entsprechend der zuvor erwähnten Schnittstelleneinrichtung IF1 ausgestattet. Diese Schnittstelleneinrichtungen IFm, IFn können ebenfalls parallele oder serielle Schnittstelleneinrichtungen sein.

Mit ihren Schnittstelleneinrichtungen IF1...IFm, IFn sind die Hausgeräte A1...Am, An über in Fig. 1 als bidirektional betriebene Verbindungsleitungen dargestellte Anschlussleitungen CB1...CBm, CBn mit zugehörigen Buskopplern BCU1... BCUm, BCUn verbunden. Über diese Buskoppler BCU1, BCUm, BCUn sind die Hausgeräte A1...Am, An an dem ersten Kommunikationsnetz angeschlossen, welches in Fig. 1 durch ein eine einzige Busleitungsanordnung HB umfassendes leitungsgebundenes Kommunikationsnetz dargestellt ist, das über eine Vielzahl von Einzelleitungen verfügen kann. Die erwähnten Buskoppler BCU1...BCUm, BCUn dienen hier unter anderem dazu, hausgerätespezifische Protokolle bzw. Datenformate (sogenannte proprietäre Protokolle) in bus-einheitliche bzw. standardisierte Protokolle bzw. Datenformate umzusetzen, und umgekehrt dienen sie dazu, die in der Busleitungsanordnung HB benutzten bus-einheitlichen bzw. standardisierten Protokolle bzw. Datenformate in hausgerätespezifische Protokolle bzw. Datenformate für die einzelnen Hausgeräte umzusetzen. Damit sind hier für den Datenaustausch und das bustypische Netzwerkmanagement nicht die Hausgeräte A1...Am, An allein, sondern vor allem die Buskoppler BCU1...BCUm, BCUn verantwortlich.

Die das vorstehend erwähnte erste Kommunikationsnetz bildende bzw. zu diesem gehörende Busleitungsanordnung HB kann in dem Fall, dass die Hausgeräte A1...Am, An sich beispielsweise in einem Haus oder in einander benachbarten Häusern befinden, ein sogenannter Heimbus sein, der für sämtliche in dem betreffenden Haus oder in den betreffenden Häusern vorhandenen Hausgeräte das erste Kommunikationsnetz bildet.

An dieser Stelle sei angemerkt, dass das erste Kommunikationsnetz (HB) auch ein leitungsgebundenes Kommunikationsnetz sein kann, dessen Kommunikationsleitungen durch von einer Netzspannungsquelle gespeiste Spannungsversorgungsleitungen der einzelnen Hausgeräte gebildet sind. Dies heißt, dass in diesem Falle die Kommunikationen zwischen den Buskopplern BCU1...BCUm, BCUn und der Übergangseinrichtung GW über Spannungsversorgungsleitungen der einzelnen Hausgeräte verlaufen, die mit den betreffenden Buskopplern BCU1...BCUm, BCUn verbunden sind.

Überdies kann das erste Kommunikationsnetz (HB) auch als ein Funknetz betrieben sein, in welchem die einzelnen Hausgeräte mittels Sende-Empfangseinrichtungen kommunizieren, die dann die Funktionen der erwähnten Buskoppler BCU1, BCUm, BCUn erfüllen.

Mit der beim vorliegenden Ausführungsbeispiel gemäß Fig. 1 das erste Kommunikationsnetz bildenden Busleitungsanordnung HB sind die Übergangseinrichtungen GW1 bis GWx verbunden, über die das betreffende erste Kommunikationsnetz mit weiteren Kommunikationsnetzen NET1 bis NETx verbunden ist. Bei diesen weiteren Kommunikationsnetzen NET1 bis NETx kann es sich vorzugsweise um ein öffentliches Kommunikationsnetz bzw. um das Internet handeln. Mit den betreffenden weiteren Kommunikationsnetzen NET1 bis NETx sind, wie in Fig. 1 angedeutet, externe Steuerungs- und/oder Überwachungsgeräte verbunden, welche beispielsweise durch Personalcomputer PC1 bis PCx gebildet sein können.

Nachdem der Aufbau der in Fig. 1 dargestellten Vorrichtung bzw. Anordnung in dem für ein Verständnis der vorliegenden Erfindung erforderlichen Umfange erläutert worden ist, seien nunmehr kurz einige Verfahrensabläufe in den einzelnen Hausgeräten A1...Am, An betrachtet.

Stellt das Hausgerät A1 beispielsweise eine Waschmaschine dar, die gerade in Betrieb ist, so wird dieser Betrieb durch ein in dem Festspeicher ROM gespeichertes Waschprogramm mittels der Zentraleinheit CPU zum Ablauf gebracht. Bei den einzelnen Programmschritten auftretende bzw. für diese erforderliche Programmzustandswerte werden im Schreib-Lese-Speicher RAM gespeichert und können gegebenenfalls in der zugehörigen Anzeigevorrichtung D angezeigt werden.

Sofern beispielsweise Waschprogrammdaten über den erreichten Waschfortschritt von anderen Hausgeräten, wie beispielsweise einem Wäschetrockner benötigt werden, der ebenfalls an der zu dem ersten Kommunikationsnetz gehörenden Busleitungsanordnung HB angeschlossen ist, werden die dazu erforderlichen Daten bzw. Kommunikationssignale von dem Hausgerät A1 über dessen Schnittstelleneinrichtung IF1 und den mit dieser verbundenen Buskoppler BCU1 zum ersten Kommunikationsnetz übertragen. Über dieses erste Kommunikationsnetz sowie den in Frage kommenden Buskoppler, wie beispielsweise den Buskoppler BCUm, gelangen die betreffenden Daten bzw. Kommunikationssignale sodann zu dem zugehörigen Wäschetrockner, der beispielsweise durch das Hausgerät Am gebildet sein mag. Dieses Hausgerät Am bzw. der dieses Hausgerät bildende Wäschetrockner kann somit beispielsweise vorbereitende Maßnahmen für ein bevorstehendes Trocknen der noch in der erwähnten Waschmaschine befindlichen Wäsche treffen, wie ein Vorheizen.

Neben der vorstehend erwähnten Kommunikation zwischen Hausgeräten, die an dem ersten Kommunikationsnetz bzw. der zu diesem gehörenden Busleitungsanordnung HB angeschlossen sind, gibt es jedoch auch noch andere Kommunikationen, in die die einzelnen Hausgeräte A1...Am, An einbezogen sind. Eine derartige Kommunikation läuft beispielsweise dann ab, wenn in eines der betreffenden Hausgeräte ein aktualisiertes Programm geladen werden soll. Ein solcher Ladevorgang kann beispielsweise von einem der in Fig. 1 dargestellten externen Steuerungs- und/oder Überwachungsgeräte PC1 bis PCx über eines der weiteren Kommunikationsnetze NET1 bis NETx und eine der dargestellten Übergangseinrichtungen GW1 bis GWx zu dem ersten Kommunikationsnetz und von diesem über den entsprechenden Buskoppler des in Frage kommenden Hausgerätes zu diesem hin erfolgen.

Weitere Kommunikationen mit einem Hausgerät der betrachteten Hausgeräte A1...Am, An können sich beispielsweise bei Ferndiagnosen durch die erwähnten externen Steuerungs- und/oder Überwachungsgeräte PC1 bis PCx oder aus einer Fernüberwachung des betreffenden Hausgeräts durch eines dieser externen Steuerungs- und/oder Überwachungsgeräte PC1 bis PCx ergeben.

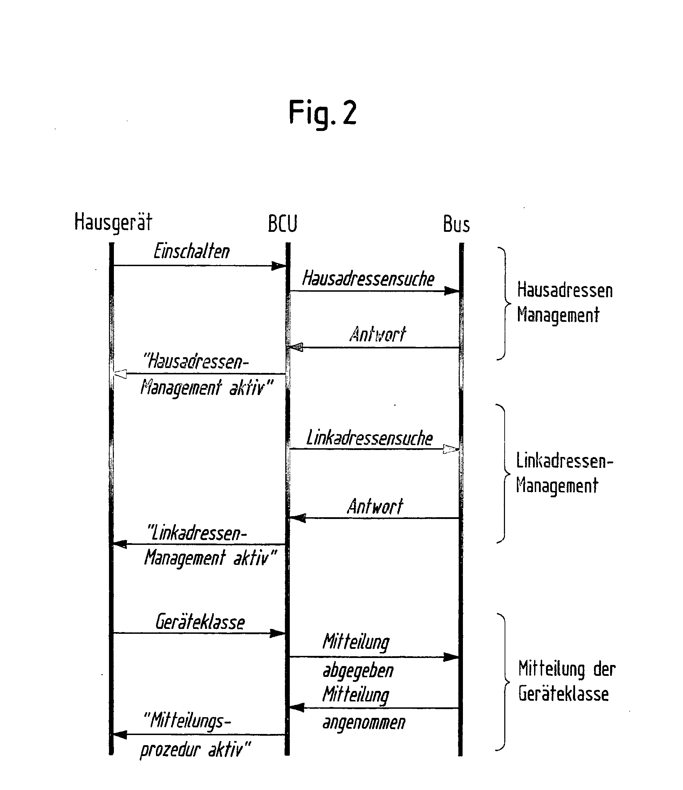

Nunmehr sei das Verfahren gemäß der vorliegenden Erfindung an einem Ausführungsbeispiel unter Bezugnahme auf die in Fig. 2 enthaltene schematische Darstellung des Ablaufs von Registrierungsvorgängen näher erläutert.

In Fig. 2 sind drei senkrecht verlaufende Balkenlinien dargestellt, die ein Hausgerät (mit Hausgerät bezeichnet), einen zugehörigen Buskoppler (mit BCU bezeichnet) und die Busleitungsanordnung (mit Bus bezeichnet) symbolisieren. Zwischen den betreffenden Balkenlinien eingetragene Pfeillinien bezeichnen jeweils ablaufende Vorgänge oder abgegebene Meldungen.

Wenn eines der in Fig. 1 dargestellten Hausgeräte, wie das Hausgerät A1, mit der Busleitungsanordnung HB über seinen zugehörigen Buskoppler BCU1 verbunden wird, beispielsweise dadurch, dass der zugehörige Spannungsversorgungsschalter SW betätigt wird, läuft die Registrierung des Anschlusses des betreffenden Hausgeräts A1 in einem die Busleitungsanordnung HB umfassenden virtuellen Netzwerk ab. Die betreffende Registrierungsprozedur beginnt, wie in Fig. 2 veranschaulicht mit einem sogenannten Hausadressen-Management, dem ein Kettungs- bzw. Linkadressen-Management und eine Mitteilungsprozedur folgen. Bei all diesen Vorgängen wird der Ablauf und/oder Zustand der Registrierung des Anschlusses des betreffenden Hausgeräts A1 an der Busleitungsanordnung HB gemäß der Erfindung mittels derer dem betreffenden Hausgerät A1 zugehörigen Anzeigevorrichtung D visualisiert.

Beim Hausadressen-Management erhält das betreffende Hausgerät, wie das Hausgerät A1, innerhalb des virtuellen Netzwerks eine eindeutige Hausadresse unter den am Hausbus HB angeschlossenen Hausgeräten A1 ... Am, An. Dabei wird eine Hausadressensuche von dem zugehörigen Buskoppler BCU1 des betreffenden Hausgeräts A1 aus vorgenommen; dieser Buskoppler BCU1 erzeugt Adressen und gibt diese über den Hausbus HB ab. Ist eine solche Adresse bereits für ein anderes Hausgerät, wie z.B. das Hausgerät Am vergeben, so meldet dies dessen zugehöriger Buskoppler, wie der Buskoppler BCUm, gewissermaßen als "Einspruch". Daraufhin versucht der Buskoppler BCU1 des erstgenannten Hausgeräts A1 es mit wenigstens einer anderen Adresse, bis schließlich eine "positive" Antwort von den übrigen Buskopplern vorliegt, die am Hausbus HB angeschlossen sind. Diese Adresse wird dann dem Hausgerät A1 innerhalb des betreffenden Hausgeräteverbandes in dem erwähnten virtuellen Netzwerk als Hausadresse zugewiesen, und sie bleibt dem betreffenden Hausgerät A1 in diesem Verband in dem zugehörigen Buskoppler BCU1 auch künftig zugewiesen, z.B. nach Abschalten des betreffenden Hausgeräts A1 oder nach dessen Wegnahme von und Wiederanschließen an dem zug e-hörigen Buskoppler BCU1.

Das vorstehend erläuterte Hausadressen-Management entspricht somit einem Adressensuchverfahren, das im englischen als trial and error bezeichnet wird. Diese Prozedur dauert eine gewisse Zeit, z.B. 5 bis 10 Minuten. Während dieser Zeit wird in der dem Hausgerät A1 zugehörigen Anzeigeeinrichtung D der Zustand und/oder Ablauf des betreffenden Registrierungsvorgangs visualisiert, beispielsweise durch die Anzeige "Hausadressen-Management aktiv".

Obwohl durch das vorstehend erläuterte Hausadressen-Management das jeweilige Hausgerät, wie das Hausgerät A1, mit einer eindeutigen Hausadresse versehen wird, ist dieses damit allerdings noch nicht über die Busleitungsanordnung, also den Hausbus HB erreichbar. Es wird nämlich noch eine Information darüber benötigt, über welchen Buskoppler das betreffende Hausgerät an der genannten Busleitungsanordnung HB angeschlossen ist. Hier kommt nun anschließend das Kettungs- bzw. Linkadressen-Management zur Anwendung, durch das der Buskoppler eines Hausgeräts, bezüglich dessen gerade ein Hausadressen-Management durchgeführt worden ist, eine eindeutige Linkadresse innerhalb des die Busleitungsanordnung bzw. den Hausbus HB umfassenden virtuellen Netzwerks erhält.

Im Prinzip läuft bei dieser Prozedur ein entsprechendes Verfahren ab, wie es beim Hausadressen-Management erläutert worden ist. Zunächst laufen ein oder mehrere Linkadressenversuche ab und erst bei "positiver" Antwort von den übrigen Buskopplern besitzt der Buskoppler, der gerade das Kettungs- bzw. Linkadressen-Management durchführt, eine für ihn verwendbare Adresse. Die so ermittelte Adresse wird schließlich in dem betreffenden Buskoppler, wie dem Buskoppler BCU1 des Hausgerätes A1 festgehalten, der somit über die Gesamtadresse verfügt, unter der das betreffende Hausgerät, wie das Hausgerät A1 in dem die Busleitungsanordnung bzw. den Hausbus HB umfassenden virtuellen Netz eindeutig bezeichnet bzw. adressierbar ist.

Das vorstehend erläuterte Kettungs- bzw. Linkadressen-Management dauert ebenfalls eine gewisse Zeit, z.B. bis zu zwei Minuten. Während dieser Zeit wird in der dem Hausgerät A1 zugehörigen Anzeigeeinrichtung D der Zustand und/oder Ablauf des betreffenden Registrierungsvorgangs visualisiert, beispielsweise durch die Anzeige "Linkadressen-Management aktiv".

Bei der schließlich durchgeführten Mitteilungsprozedur, die auch als Anmeldungs- bzw. Einschreibprozedur (im Englischen enrolment) bezeichnet wird, gibt ein an der Busleitungsanordnung HB angeschlossenes Hausgerät, wie das Hausgerät A1, bezüglich dessen die vorstehend erwähnten Verfahren, nämlich das Hausadressen-Management und das Linkadressen-Management durchgeführt worden sind, seine Identifikation, das heißt seine Geräteklasse über die Busleitungsanordnung HB bekannt. Die Bekanntgabe der Geräteklasse erfolgt dabei zusammen mit der Abgabe der das betreffende Hausgerät eindeutig bezeichnenden Adresse von dem zugehörigen Buskoppler, wie dem Buskoppler BCU1. Es wird also über die Busleitungsanordnung HB an die übrigen Buskoppler und gegebenenfalls an die in Fig. 1 dargestellten Übergangseinrichtungen GW1 bis GWx eine Mitteilung über das betreffende eine Hausgerät A1 abgegeben. Dadurch können zum Beispiel andere Hausgeräte, die ebenfalls an der Busleitungsanordnung HB angeschlossen sind und die an einer Kommunikation mit dem betreffenden Hausgerät A1 interessiert sind oder die eine solche Kommunikation auszuführen haben, die erwähnte Mitteilung über das erwähnte Hausgerät A1 annehmen und dies entsprechend melden.

Diese Mitteilungsprozedur beansprucht ebenfalls eine gewisse Zeit, z.B. eine Minute. Während dieser Zeit wird in der dem Hausgerät A1 zugehörigen Anzeigeeinrichtung D der Zustand und/oder Ablauf des betreffenden Registrierungsvorgangs visualisiert, beispielsweise durch die Anzeige "Mitteilungsprozedur aktiv".

Zusätzlich zu den vorstehend anhand von Fig. 2 erläuterten Visualisierungen von Registrierungsabläufen bzw. -zuständen können mittels der Anzeigeeinrichtung des jeweiligen Hausgerätes noch andere Zustände visualisiert werden, wie z.B. "Suche nach Übergangseinrichtung", "Keine Übergangseinrichtung vorhanden", "Anmeldung an Übergangseinrichtung GWx", "Abmeldung von Übergangseinrichtung GW1 ", "Keine Übe r-gangseinrichtung vorhanden, keine Kommunikation extern möglich".

Somit erfolgt mittels der Anzeigeeinrichtung des jeweiligen Hausgerätes eine Visualisierung der Aktivität des zugehörigen Buskopplers auf der erwähnten Busleitungsanordnung HB.

Wie weiter oben bereits erwähnt, werden das Linkadressen-Management und die Mitteilungsprozedur bei jeder Inbetriebnahme eines Hausgeräts oder bei jeder Wiederanschaltung des betreffenden Hausgeräts an seinem zugehörigen Buskoppler durchgeführt. Der Grund hierfür liegt darin, dass nach Außerbetriebnahme des betreffenden Hausgeräts inzwischen ein anderes entsprechendes Hausgerät an der Busleitungsanordnung angeschlossen sein könnte, bezüglich dessen ein entsprechendes Linkadressen-Management und eine entsprechende Mitteilungsprozedur durchgeführt werden, und dass dieses andere Hausgerät gegebenenfalls die Kettungs- bzw. Linkadresse erhält, die das Hausgerät besaß, das nunmehr außer Betrieb ist.

Lediglich die Hausadresse, die einem Hausgerät zugewiesen ist, braucht nur bei dessen erster Inbetriebnahme vergeben zu werden, da der an der Busleitungsanordnung HB angeschlossene zugehörige Buskoppler diese Adresse kennt und beibehält und somit sichergestellt ist, dass diese Adresse nicht nochmals für ein anderes Hausgerät verwendet wird, welches an einem anderen Buskoppler angeschlossen wird, der mit der betreffenden Busleitungsanordnung verbunden ist.

Die vorstehend erläuterte Registrierungsprozedur beim Anschluss eines Hausgeräts, wie des Hausgeräts A1, an der Busleitungsanordnung bzw. dem Hausbus HB muss nun nicht nur in der zuvor erläuterten Art und Weise erfolgen, sondern die betreffende Registrierungsprozedur kann auch in einer anderen Art und Weise ablaufen. So kann die betreffende Registrierungsprozedur beispielsweise unter Verwendung einer an der Busleitungsanordnung bzw. an dem Hausbus HB angeschlossenen zentralen Adressenvergabeeinrichtung ablaufen.

Unabhängig von der jeweils angewandten Registrierungsprozedur, die bei erstmaliger oder bei jedmaliger Inbetriebnahme eines Hausgerätes, wie des Hausgerätes A1 abläuft, wird jedoch der jeweilige Registrierungsablauf und/oder Registrierungszustand in der dem betreffenden Hausgerät zugehörigen Anzeigeeinrichtung visualisiert. Dadurch kann der Benutzer oder Betreiber des betreffenden Hausgeräts erkennen, dass dieses Hausgerät sich beim Anschluss an der erwähnten Busleitungsanordnung in der Registrierungsphase befindet und nicht etwa gestört ist bzw. fehlerhaft arbeitet.

## Patentansprüche

1. Verfahren zum Erfassen der Registrierung des Anschlusses eines Hausgerätes (A1) an einer Busleitungsanordnung (HB), an der eine Mehrzahl von Hausgeräten (A1...Am, An) für die Übertragung von Daten anzuschließen bzw. angeschlossen ist, wobei das betreffende eine Hausgerät (A1) mittels einer Geräteschnittstelle (IF1) mit der Busleitungsanordnung (HB) verbunden ist, über die Daten in das und/oder von dem Hausgerät (A1) übertragen werden, und wobei das Hausgerät (A1) über wenigstens eine Anzeigeeinrichtung (D) verfügt, mittels der Betriebszustände und/oder Betriebsdaten des Hausgerätes (A1) angezeigt werden, **dadurch gekennzeichnet,**
**dass** mittels der Anzeigeeinrichtung (D) des Hausgerätes (A1) der Ablauf und/oder Zustand der Registrierung des Anschlusses des Hausgerätes (A1) an der Busleitungsanordnung (HB) während des Registriervorgangs visualisiert wird, und
**dass** für die Visualisierung des Registrierungsablaufs und/oder -zustands von einem mit dem Hausgerät (A1) verbundenen Buskoppler (BCU1) gelieferte Ablauf- und/oder Statusmeldungen herangezogen werden.

2. Verfahren nach Anspruch 1, **dadurch gekennzeichnet, dass** die Registrierung auf eine Inbetriebnahme des an der Busleitungsanordnung (HB) angeschlossenen Hausgeräts (A1) hin vorgenommen wird.

3. Verfahren nach Anspruch 1 oder 2, **dadurch gekennzeichnet, dass** im Zuge der Visualisierung des Registrierungsablaufs und/oder -zustands durch die Anzeigeeinrichtung (D) zunächst ein Hausadressen-Management mittels der Anzeigeeinrichtung (D) visualisiert wird, durch das das Hausgerät (A1) in ein die Busleitungsanordnung (HB) umfassendes virtuelles Netzwerk **dadurch** eingebunden wird, dass ihm in dem virtuellen Netzwerk eine eindeutige Hausgeräteadresse zugeteilt wird,
dass daraufhin durch die Anzeigeeinrichtung (D) ein Kettungs- bzw. Linkadressen-Management visualisiert wird, durch das in dem virtuellen Netzwerk dem mit dem Hausgerät (A1) verbundenen Buskoppler (BCU1) eine eindeutige Buskoppleradresse zugeteilt wird, an Hand der der betreffende Buskoppler (BCU1) unter den mit den einzelnen vorhandenen Hausgeräten (A1...Am, An) verbundenen Buskopplern (BCU1...BCUm, BCUn) eindeutig identifizierbar ist,
und dass schließlich durch die Anzeigeeinrichtung (D) die Durchführung einer Mitteilungsprozedur visualisiert wird, durch die die Geräteklasse des Hausgeräts (A1) in dem virtuellen Netzwerk bekanntgegeben wird, anhand der die in dem virtuellen Netzwerk vorhandenen Hausgeräte (A1...Am, An) angeben, ob sie mit dem Hausgerät (A1) kommunizieren wollen oder müssen.

4. Verfahren nach Anspruch 3, **dadurch gekennzeichnet, dass** der das Hausadressen-Management umfassende Visualisierungsschritt lediglich bei Erstinbetriebnahme des Hausgeräts (A1) durchgeführt wird und dass die das Linkadressen-Management sowie die Mitteilungsprozedur umfassenden Visualisierungsschritte bei jeder Inbetriebnahme des Hausgeräts (A1) durchgeführt werden.

5. Verfahren nach einem der Ansprüche 1 bis 4, **dadurch gekennzeichnet, dass** die Busleitungsanordnung (HB) als ein Kommunikationsleitungen umfassendes leitungsgebundenes Kommunikationsnetz betrieben wird, als dessen Kommunikationsleitungen insbesondere von einer Netzspannungsquelle gespeiste Stromversorgungsleitungen der einzelnen Hausgeräte (A1...Am, An) verwendet werden.

6. Verfahren nach einem der Ansprüche 1 bis 4, **dadurch gekennzeichnet, dass** die Busleitungsanordnung (HB) als ein Funknetz betrieben wird, in welchem die einzelnen Hausgeräte (A1...Am, An) mittels die Buskoppler (BCU1...BCUm, BCUn) bildender Sende-/ Empfangseinrichtungen kommunizieren.

7. Hausgerät mit einer Anzeigeeinrichtung (D) zur Anzeige von Betriebszustände und/oder Betriebsdaten des Hausgerätes (A1), mit einer Geräteschnittstelle (IF1), die mit einer Busleitungsanordnung (HB) verbindbar ist, über welche Daten in das und/oder von dem Hausgerät (A1) übertragbar sind, **dadurch gekennzeichnet, dass** die Anzeigeeinrichtung (D) des Hausgeräts (A1) über dessen hausgeräteeigene Geräteschnittstelle (IF1) von einem mit der Busleitungsanordnung (HB) verbundenen Buskoppler (BCU1) während der Registrierung des Anschlusses des Hausgerätes (A1) an der Busleitungsanordnung (HB) unter Visualisierung des Registrierungsablaufs und/oder -zustands ansteuerbar ist.

8. Hausgerät nach Anspruch 7, **dadurch gekennzeichnet, dass** die Registrierung des Anschlusses des Hausgerätes (A1) an der Busleitungsanordnung (HB) und damit die Visualisierung des Registrierungsablaufs und/oder -zustands durch Einschalten der Versorgungsspannung für das Hausgerät (A1) auslösbar ist.

9. System zur Durchführung des Verfahrens nach einem der Ansprüche 1 bis 6, wobei das System eine Busleitungsanordnung (HB) umfasst, an der eine Mehrzahl von Hausgeräten (A1...Am, An) anzuschließen bzw. angeschlossen ist, wobei das System ein Hausgerät (A1) nach einem der Ansprüche 7 oder 8 umfasst, das mittels einer Geräteschnittstelle (IF1) über einen Buskoppler (BCU1) mit der Busleitungsanordnung (HB) verbunden ist, und wobei der Buskoppler (BCU1) zur Lieferung von Ablauf- und/oder Statusmeldungen an das Hausgerät (A1) ausgebildet ist.

10. System nach Anspruch 9, **dadurch gekennzeichnet, dass** die Busleitungsanordnung (HB) über zumindest eine Übergangseinrichtung (GW1 bis GWx) und ein gegebenenfalls mit dieser verbundenes Kommunikationsnetz (NET1 bis NETx) mit einem externen Steuerungs- und/oder Überwachungsgerät (PC1 bis PCx) verbunden ist.

## Claims

1. Method for detecting registration of the connection of a domestic appliance (A1) to a bus conductor arrangement (HB), with which a plurality of domestic appliances (A1 ... Am, An) is to be connected or is connected for transmission of data, wherein the relevant one domestic appliance (A1) is connected by means of an appliance interface (IF1) with the bus conductor arrangement (HB), by way of which data are transmitted to and/or from the domestic appliance (A1), and wherein the domestic appliance (A1) has at least one display device (D) by means of which operational states and/or operating data of the domestic appliance (A1) are indicated, **characterised in that** the sequence and/or state of the registration of the connection of the domestic appliance (A1) with the bus conductor arrangement (HB) is visualised during the registration process by means of the display device (D) of the domestic appliance (A1) and that for the visualisation of the registration sequence and/or state use is made of sequence and/or status reports delivered by a bus coupler (BCU1) connected with the domestic appliance (A1).

2. Method according to claim 1, **characterised in that** the registration is undertaken on placing a domestic appliance (A1), which is connected with the bus conductor arrangement (HP), in operation.

3. Method according to claim 1 or 2, **characterised in that** in the course of visualisation of the registration sequence and/or state by the display device (D) initially there is visualisation by means of the display device (D) of a house address management, by which the domestic appliance (A1) is incorporated in a virtual network, which comprises the bus conductor arrangement (HB), **in that** a unique domestic appliance address is allocated thereto in the virtual network, that thereupon there is visualisation by the display device (D) of a chain address or link address management, by which there is allocation in the virtual network to the bus coupler (BCU1), which is connected with the domestic appliance (A1), of a unique bus coupler address by way of which the relevant bus coupler (BCU1) is uniquely identifiable amongst the bus couplers (BCU1 ... BCUm, BCUn) connected with the individual domestic appliances (A1 ... Am, An) which are present, and that finally there is visualisation by the display device (D) of performance of a communications procedure, by which there is made known in the virtual network the appliance category of the domestic appliance (A1), by way of which the domestic appliances (A1 ... Am, An) present in the virtual network indicate whether they wish to or must communicate with the domestic appliance (A1).

4. Method according to claim 3, **characterised in that** the visualisation step comprising the house address management is undertaken merely at the time of first placing the domestic appliance (A1) in operation and that the visualisation steps comprising the link address management as well as the communications procedure are undertaken on each occasion of placing the domestic appliance (A1) in operation.

5. Method according to one of claims 1 to 4, **characterised in that** the bus conductor arrangement (HB) is operated as a wire-bound communications network, which comprises communications lines and as the communications lines of which use is made of in particular power supply lines, which are supplied by a mains voltage source, of the individual domestic appliances (A1 ... Am, An).

6. Method according to one of claims 1 to 4, **characterised in that** the bus conductor arrangement (HB) is operated as a radio network in which the individual domestic appliances (A1 ... Am, An) communicate by means of transmitting/receiving devices forming the bus couplers (BCU1 ... BCUm, BCUn).

7. Domestic appliance with a display device (D) for indication of operational states and/or operating data of the domestic appliances (A1), with an appliance interface (IF1) connectible with a bus conductor arrangement (HB), by way of which data are transmissible to/or from the domestic appliance (A1), **characterised in that** the display device (D) of the domestic appliance (A1) is controllable in drive by way of the appliance interface (IF1) thereof, which is intrinsic to the domestic appliance, by a bus coupler (BCU1), which is connected with the bus conductor arrangement (HB), during registration of the connection of the domestic appliance (A1) with the bus conductor arrangement (HB) in conjunction with visualisation of the registration sequence and/or state.

8. Domestic appliance according to claim 7, **characterised in that** the registration of the connection of the domestic appliance (A1) with the bus conductor arrangement (HB) and thus the visualisation of the registration sequence and/or state can be triggered by switching on the supply voltage for the domestic appliance (A1).

9. System for performance of the method according to one of claims 1 to 6, wherein the system comprises a bus conductor arrangement (HB) with which a plurality of domestic appliances (A1 ... Am, An) is to be connected or is connected, wherein the system comprises a domestic appliance (A) according to one of claims 7 and 8, which is connected with the bus conductor arrangement (HB) by means of an apparatus interface (IF1) via a bus coupler (BCU1) and wherein the bus coupler (BCU1) is constructed for delivery of a sequence and/or status reports to the domestic appliance (A1).

10. System according to claim 9, **characterised in that** the bus conductor arrangement (HB) is connected with an external control and/or monitoring apparatus (PC1 to PCx) by way of at least one transfer device (GW1 to GWx) and a communications network (NET1 to NETx) optionally connected therewith.

## Revendications

1. Procédé pour détecter l'enregistrement du raccordement d'un appareil ménager (A1) à un ensemble de lignes de bus (HB) auquel une pluralité d'appareils ménagers (A1 ... Am, An) doit être raccordée resp. est raccordée pour la transmission de données, ledit appareil ménager concerné (A1) étant relié, au moyen d'une interface d'appareil (IF1), à l'ensemble de lignes de bus (HB) via lequel des données sont transmises vers et/ou au départ de l'appareil ménager (A1) et l'appareil ménager (A1) disposant d'au moins un dispositif d'affichage (D) au moyen duquel des états de fonctionnement et/ou des données de fonctionnement de l'appareil ménager (A1) sont affichés, **caractérisé en ce que**, au moyen du dispositif d'affichage (D) de l'appareil ménager (A1), le déroulement et/ou l'état de l'enregistrement du raccordement de l'appareil ménager (A1) à l'ensemble de lignes de bus (HB) est visualisé pendant l'opération d'enregistrement et **en ce que**, aux fins de la visualisation du déroulement de l'enregistrement et/ou de l'état de l'enregistrement, il est fait appel à des messages de déroulement et/ou de statut fournis par un coupleur de bus (BCU1) relié à l'appareil ménager (A1).

2. Procédé selon la revendication 1, **caractérisé en ce que** l'enregistrement est opéré suite à une mise en service de l'appareil ménager (A1) raccordé à l'ensemble de lignes de bus (HB).

3. Procédé selon la revendication 1 ou 2, **caractérisé en ce que**, dans le cadre de la visualisation du déroulement de l'enregistrement et/ou de l'état de l'enregistrement par le dispositif d'affichage (D), est tout d'abord visualisée, au moyen du dispositif d'affichage (D), une gestion d'adresses domestiques par laquelle l'appareil ménager (A1) est intégré dans un réseau virtuel comprenant l'ensemble de lignes de bus (HB) par le fait que lui est attribuée, dans le réseau virtuel, une adresse univoque d'appareil ménager, **en ce que**, ensuite, le dispositif d'affichage (D) visualise une gestion de chaînage resp. d'adresses de liens par laquelle est attribuée, dans le réseau virtuel, au coupleur de bus (BCU1) relié à l'appareil ménager (A1), une adresse univoque de coupleur de bus à l'aide de laquelle le coupleur de bus concerné (BCU1) est identifiable univoquement parmi les coupleurs de bus (BCU1 ... BCUm, BCUn) reliés aux différents appareils ménagers (A1 ... Am, An) présents, et **en ce que**, finalement, le dispositif d'affichage (D) permet la visualisation de l'exécution d'une procédure de communication qui communique, dans le réseau virtuel, la classe d'appareils de l'appareil ménager (A1) à l'aide de laquelle les appareils ménagers (A1 ... Am, An) présents dans le réseau virtuel indiquent s'ils veulent ou doivent communiquer avec l'appareil ménager (A1).

4. Procédé selon la revendication 3, **caractérisé en ce que** l'étape de visualisation comprenant la gestion d'adresses domestiques n'est exécutée qu'à la première mise en service de l'appareil ménager (A1) et **en ce que** les étapes de visualisation comprenant la gestion d'adresses de liens ainsi que la procédure de communication sont exécutées à chaque mise en service de l'appareil ménager (A1).

5. Procédé selon l'une des revendications 1 à 4, **caractérisé en ce que** l'ensemble de lignes de bus (HB) est exploité en tant que réseau de communication filaire comprenant des lignes de communication, des lignes d'alimentation en courant des différents appareils ménagers (A1 ... Am, An) alimentées par une source de tension réseau étant utilisées en tant que lignes de communication dudit réseau de communication.

6. Procédé selon l'une des revendications 1 à 4, **caractérisé en ce que** l'ensemble de lignes de bus (HB) est exploité en tant que réseau radio dans lequel les différents appareils ménagers (A1 ... Am, An) communiquent au moyen de dispositifs émetteurs / récepteurs constituant les coupleurs de bus (BCU1 ... BCUm, BCUn).

7. Appareil ménager comportant un dispositif d'affichage (D) pour afficher des états de fonctionnement et/ou des données de fonctionnement de l'appareil ménager (A1), une interface d'appareil (IF1) qui peut être reliée à un ensemble de lignes de bus (HB), via lequel des données peuvent être transmises vers le ou au départ de l'appareil ménager (A1), **caractérisé en ce que** le dispositif d'affichage (D) de l'appareil ménager (A1) est commandable via sa propre interface d'appareil (IF1) par un coupleur de bus (BCU1) relié à l'ensemble de lignes de bus (HB) pendant l'enregistrement du raccordement de l'appareil ménager (A1) à l'ensemble de lignes de bus (HB) avec visualisation du déroulement de l'enregistrement et/ou de l'état de l'enregistrement.

8. Appareil ménager selon la revendication 7, **caractérisé en ce que** l'enregistrement du raccordement de l'appareil ménager (A1) à l'ensemble de lignes de bus (HB) et donc la visualisation du déroulement de l'enregistrement et/ou de l'état de l'enregistrement sont déclenchables par mise en marche de la tension d'alimentation pour l'appareil ménager (A1).

9. Système permettant d'exécuter le procédé selon l'une des revendications 1 à 6, le système comprenant un ensemble de lignes de bus (HB) auquel une pluralité d'appareils ménagers (A1 ... Am, An) doit être raccordée resp. est raccordée, le système comprenant un appareil ménager (A1) selon l'une des revendications 7 ou 8, qui est relié à l'ensemble de lignes de bus (HB) au moyen d'une interface d'appareil (IF1) via un coupleur de bus (BCU1), le coupleur de bus (BCU1) étant configuré pour fournir des messages de déroulement et/ou de statut à l'appareil ménager (A1).

10. Système selon la revendication 9, **caractérisé en ce que** l'ensemble de lignes de bus (HB) est relié à un appareil externe de commande et/ou de surveillance (PC1 à PCx) via au moins un dispositif de jonction (GW1 à GWx) et un réseau de communication (NET1 à NETx) qui y est relié, le cas échéant.
